# FASCICULE DE BREVET EUROPEEN

(11) **EP 2 430 394 B1**
(45) Date de publication et mention de la délivrance du brevet: **05.09.2018**
(21) Numéro de dépôt: 10728758.3
(22) Date de dépôt: 12.05.2010
(51) Int. Cl.: G01B 11/16, G01B 11/24, G01C 11/02, G01N 21/88, G06T 7/00

(54) **PROCEDE ET SYSTEME D'INSPECTION A DISTANCE D'UNE STRUCTURE**
VERFAHREN UND SYSTEM ZUR UNTERSUCHUNG EINER BEABSTANDETEN STRUKTUR
METHOD AND SYSTEM OF INSPECTING A STRUCTURE FROM A DISTANCE

(30) Priorité: 14.05.2009 FR 0953211
(43) Date de publication de la demande: 21.03.2012
(73) Titulaire: Airbus Operations (S.A.S.), 31060 Toulouse (FR)
(72) Inventeur: BURGUNDER, Samuel, F-31200 Toulouse (FR); ROUYRE, François, 31700 Cornebarrieu (FR)
(74) Mandataire: Gicquel, Olivier Yves Gérard
(86) Numéro de dépôt international: PCT/FR2010/050935
(87) Numéro de publication internationale: WO 2010/130962

(56) Documents cités:
- EP-A- 0 644 501
- WO-A2-2007/012781
- FR-A1- 2 888 362
- GB-A- 2 270 155
- US-A1- 2007 176 927
- US-A1- 2008 267 487
- US-A1- 2009 002 364

## Description

### Domaine de l'invention

L'invention concerne un procédé d'inspection à distance d'une structure telle qu'une structure d'aéronef. Ce procédé d'inspection permet de vérifier, à distance, l'état d'une structure, par exemple lors d'une opération de maintenance. L'invention concerne également un système mettant en oeuvre ce procédé.

L'invention trouve des applications dans le domaine du contrôle et de l'inspection de structures assistés par ordinateur. Elle trouve, en particulier, des applications dans le domaine de l'aéronautique pour la maintenance des aéronefs ou pour l'assemblage de structures d'aéronefs.

### État de la technique

Compte-tenu du niveau de sécurité requis pour qu'un aéronef soit autorisé à voler, la phase de maintenance est une phase primordiale dans la vie d'un aéronef. Cette phase de maintenance nécessite une inspection détaillée de la structure de l'aéronef, avec réparation ou remplacement des pièces défectueuses.

Actuellement, la maintenance d'un aéronef est effectuée manuellement. Lorsque l'aéronef est au sol, un opérateur de maintenance monte à bord pour inspecter les différentes zones de la structure de l'aéronef. Pour cette inspection, l'opérateur de maintenance a, à sa disposition, un manuel dans lequel sont répertoriées les différentes pièces de la structure de l'aéronef. Ce manuel se présente généralement sous une forme papier ou, quelques fois, sous une forme électronique. L'opérateur de maintenance vérifie si les pièces qu'il voit sont conformes à celles répertoriées dans le manuel. Ainsi, l'inspection de la structure de l'aéronef est faite visuellement par l'opérateur de maintenance.

Lorsque l'opérateur de maintenance repère une pièce défectueuse, il note les références de cette pièce afin de pouvoir, ultérieurement, l'échanger contre une neuve ou la réparer.

Avec une telle inspection visuelle, l'opérateur de maintenance est seul, à bord de l'aéronef, à inspecter l'état de la structure. Il est donc le seul à décider des pièces de structure à remplacer ou à réparer. Le manuel est certes d'une aide précieuse, mais la décision repose sur la seule compétence de l'opérateur de maintenance. Il est bien sûr envisageable que plusieurs opérateurs de maintenance inspectent ensemble l'aéronef, mais cela entraine un surcoût de la maintenance. Comme la maintenance est généralement effectuée par les compagnies aériennes, le surcoût est effectif pour chaque compagnie aérienne.

Par ailleurs, dans une structure d'aéronef, certaines pièces sont superposées, ou partiellement superposées, les unes sur les autres de sorte qu'une partie, ou la totalité, d'une pièce peut être difficile à visualiser. Il est alors délicat, pour l'opérateur de maintenance, de prendre une décision quant au remplacement ou à la réparation de cette pièce.

De plus, chaque pièce de la structure est référencée. La référence est inscrite sur la pièce elle-même. Aussi, pour que l'opérateur sache quelle pièce doit être remplacée ou réparée, il doit pouvoir lire sa référence. Or, dans le cas où les pièces sont superposées, totalement ou partiellement, il peut être difficile, visuellement, de lire la référence de la pièce concernée.

**Actuellement, il existe, dans** le **domaine de l'expertise automobile, des dispositifs assurant la transmission de données numériques relatives à un véhicule automobile accidenté, à un expert éloigné dudit véhicule pour permettre une expertise à distance des dommages. De tels dispositifs sont décrits dans les documents** EP 0 644 501 A1**,** US 2008/0267487 A1 **et** US 2009/0002364 A1**. Cependant, de tels dispositifs ne sont pas adaptés à l'inspection des structures d'aéronefs qui sont complexes et comportent souvent plusieurs pièces superposées ou partiellement superposées et qui doivent pouvoir être remplacées, en cas de défaillance, par l'opérateur de maintenance sur place.**

L'inspection d'une structure d'aéronef est connue, par exemple, à partir de WO 2007/012781 A2 ou FR 2 888 362 A1.

### Exposé de l'invention

L'invention a justement pour but de remédier aux inconvénients des techniques exposées précédemment. A cette fin, l'invention propose un procédé d'inspection d'une structure d'aéronef, assisté par ordinateur. Ce procédé permet à l'opérateur de maintenance d'être assisté, à distance, par un expert. Selon ce procédé, l'opérateur de maintenance, à bord de l'aéronef, réalise une image en trois dimensions de la zone de la structure à inspecter ; cette image 3D est superposée à une maquette numérique de la structure pour permettre la géolocalisation des pièces. Cette image 3D superposée à la maquette numérique est visualisable sur un ordinateur, à distance de l'aéronef. Un expert peut alors visualiser, sur l'ordinateur, la superposition d'images pour aider l'opérateur.

De façon plus précise, l'invention concerne un procédé d'inspection à distance d'une structure aéronef, le procédé comportant les opérations suivantes :
a) réalisation d'une image 3D d'une zone de la structure à inspecter,
b) superposition de cette image 3D avec une maquette numérique de la structure préalablement mémorisée, cette superposition d'images étant réalisée par un dispositif de traitement d'images positionné à proximité de la zone de structure à inspecter pour permettre une inspection de la structure sur place,
c) localisation géographique, sur la maquette de la structure, de la zone de la structure à inspecter, et inspection à distance de la zone de structure à inspecter, sur la superposition de l'image 3D et de la maquette numérique.

Le procédé de l'invention peut comporter une ou plusieurs des caractéristiques suivantes :
- l'image 3D est réalisée par stéréo-photométrie.
- l'opération a) de réalisation d'une image 3D comporte un éclairage successif et intermittent de la zone de structure à inspecter, par des sources lumineuses placées chacune à un emplacement différent, une prise d'image, à chaque éclairage, de la zone de structure à inspecter, et un traitement de différentes images ainsi obtenues pour réaliser l'image 3D.
- l'opération a) comporte quatre prises d'images de la zone de structure à inspecter, sous quatre éclairages différents.
- l'étape c) de localisation géographique comporte une opération de pointage télécommandé d'une pièce de la zone de structure.
- il comporte une étape préliminaire de prélocalisation de la zone à inspecter par détection et lecture de données contenues dans des puces fixées chacune sur une pièce de la structure.

L'invention concerne également un système de mise en oeuvre du procédé d'inspection à distance d'une structure d'aéronef, le système comportant:
- un dispositif de prise d'images (10) apte à être installé à proximité de la zone de structure à inspecter (2) et comportant une pluralité de sources lumineuses (12) réparties autour d'une caméra (11), et
- un dispositif de traitement d'images (6) relié au dispositif de prise d'images (10) et installé à proximité de la zone de structure à inspecter (2), ce dispositif de traitement d'images étant apte à générer une image 3D de la zone de structure à inspecter à partir d'images réalisées par la caméra (11) et à superposer ladite image 3D avec une maquette numérique de la zone de la structure permettant une inspection de la structure sur place, et
- un ordinateur (4, 5) éloigné de la structure et apte à superposer l'image 3D avec une maquette numérique de la zone de la structure pour permettre une inspection à distance de la zone de structure à inspecter.

Ce système d'inspection à distance d'une structure peut comporter une ou plusieurs des caractéristiques suivantes :
- les sources lumineuses sont constituées de quatre LEDs réparties à chaque coin d'une façade du dispositif de prise d'images.
- il comporte un ordinateur relié par une liaison sans fil au dispositif de traitement d'images.
- le dispositif de prise d'images comporte un dispositif d'émission d'un faisceau laser télécommandé.

### Brève description des dessins

La figure 1 représente schématiquement le système de l'invention, avec les emplacements des différents éléments du système.
La figure 2 représente schématiquement le dispositif de prise d'images du système de l'invention.
La figure 3 représente une série d'images réalisées par le dispositif de la figure 2.
Les figures 4A, 4B, 4C, et 4D représentent des agrandissements des images de la série d'images de la figure 3.
La figure 5 représente l'image 3D obtenue à partir des images des figures 4A, 4B, 4C, et 4D.
La figure 6 représente un exemple de maquette numérique d'une structure d'aéronef.
La figure 7 montre la superposition de l'image 3D avec la maquette numérique de la figure de la structure d'aéronef.
La figure 8 représente le dispositif de prise d'images équipé d'un dispositif d'émission de faisceau laser.

### Description détaillée de modes de réalisation de l'invention

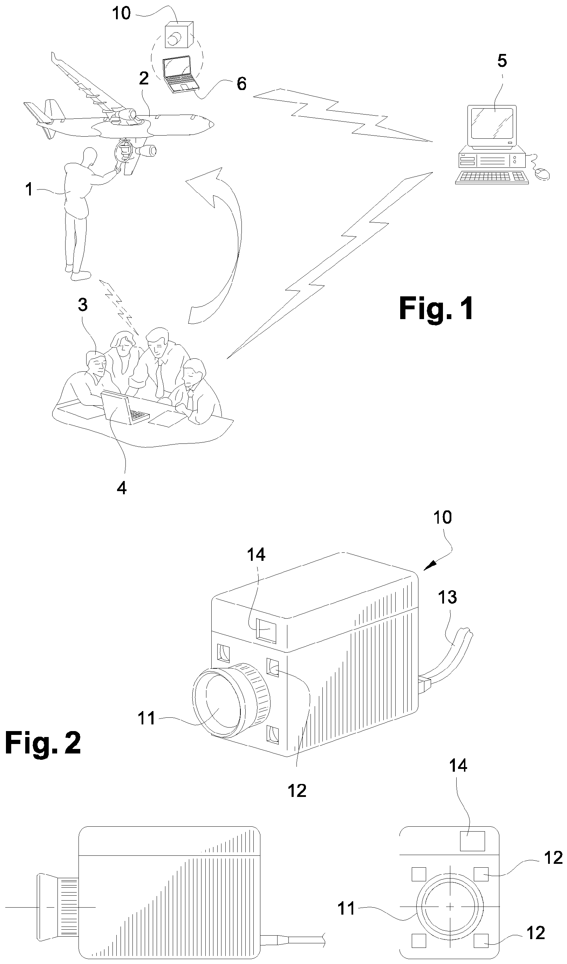

L'invention concerne un procédé d'inspection d'une structure assisté par ordinateur. Dans ce procédé, la structure à inspecter est située à un premier emplacement tandis que l'ordinateur est situé à un deuxième emplacement distant du premier emplacement. Les deux emplacements peuvent être éloignés de quelques mètres jusqu'à plusieurs kilomètres ou centaines de kilomètres l'un de l'autre. Sur la figure 1, on a représenté schématiquement un exemple d'installation dans laquelle le procédé de l'invention peut être mis en oeuvre. La structure à inspecter est une structure d'aéronef, inspectée à des fins de maintenance. On appelle structure d'aéronef un élément ou un ensemble d'éléments mécaniques, électriques, électroniques, hydrauliques, etc., participant à la construction d'un aéronef. Une structure d'aéronef peut donc être une partie seulement, de petite ou de grande dimension, d'un aéronef ou un aéronef complet.

Sur cette figure 1, on a représenté un opérateur de maintenance 1 étudiant la structure 2 d'un aéronef. Cet opérateur de maintenance 1 est équipé d'un dispositif de prise d'images 10. Ce dispositif de prise d'images 10 est relié à un dispositif de traitement d'images 6 placé sur le premier emplacement, dans l'aéronef ou à proximité de l'aéronef. Ce dispositif de traitement d'images 10 peut être un ordinateur, par exemple, de type portable. Cette association d'un dispositif de prise d'images 10 et d'un dispositif de traitement d'images 6, utilisable sur place par l'opérateur permet à celui-ci d'inspecter la structure de l'aéronef de façon autonome.

Le dispositif de prise d'images 10 peut aussi être relié à un ordinateur 5 placé dans un deuxième emplacement, distant du premier emplacement. Ce deuxième emplacement peut être, par exemple, les bureaux de la compagnie aérienne propriétaire de l'aéronef, le premier emplacement pouvant être l'atelier de maintenance de ladite compagnie aérienne ou un parking d'aéroport.

Le dispositif de prise d'images 10 est relié par des moyens de liaison classiques au dispositif de traitement d'images 6. Dans l'exemple de la figure 1, le dispositif de prise d'images 10 est relié par une liaison sans fil au dispositif de traitement d'images 6, lui-même relié par une liaison sans fil à l'ordinateur 5.

La figure 1 montre également un troisième emplacement, distant du premier et du deuxième emplacements. Ce troisième emplacement peut être, par exemple, les locaux du constructeur aéronautique. Sur ce troisième emplacement est installé un expert ou un groupe d'experts 3 équipé d'un ordinateur 4, par exemple un ordinateur portable.

L'ordinateur 4 de ce troisième emplacement est relié, par une liaison sans fil, au dispositif de traitement d'images 6 et à l'ordinateur 5.

L'expert de la compagnie aérienne et l'expert du constructeur aéronautique peuvent recevoir chacun, respectivement sur l'ordinateur 5 et sur l'ordinateur 4, l'image obtenue après traitement par le dispositif de traitement d'images 6. Comme on le verra de façon plus détaillée par la suite, cette image est une image superposée de la structure d'aéronef en trois dimensions et de la maquette numérique correspondant à la structure d'aéronef. Ainsi, l'opérateur peut inspecter de façon autonome la structure d'aéronef et décider, seul, des pièces défectueuses à changer. En cas d'incertitude, il peut solliciter l'avis d'un expert de la compagnie aérienne situé sur le deuxième emplacement et/ou l'avis d'un expert du constructeur aéronautique situé sur le troisième emplacement.

Selon le procédé de l'invention, l'inspection de la structure est effectuée en comparant la zone de structure réelle avec la zone de structure correspondante, numérisée. L'expert, de la compagnie ou du constructeur aéronautique, et l'opérateur de maintenance peuvent communiquer ensemble, par des moyens de communication qui seront cités ultérieurement, afin d'échanger leurs avis et décider, ensemble, des pièces à réparer ou à échanger, sans que l'expert ait besoin de se déplacer sur le site où est stationné l'aéronef.

Le système pour mettre en oeuvre ce procédé d'inspection de l'invention comporte un dispositif de prise d'images 10 portable, apte à être déplacé facilement par l'opérateur de maintenance. Il comporte en outre un dispositif de traitement d'images 6 ainsi qu'un ordinateur 4 et/ou 5. Le dispositif de traitement d'images 6 peut être un ordinateur classique, un ordinateur portable, une tablette PC ou tout autre moyen de traitement d'images. Il est placé à proximité de la structure à inspecter. Il peut être installé dans l'aéronef ou dans un local situé à proximité de la structure. Il est relié au dispositif de prise d'images 10, soit par une liaison filaire soit par une liaison sans fil.

L'opérateur peut visualiser l'image superposée de la structure directement sur le dispositif de traitement d'images 10. L'expert peut visualiser la même image superposée de la structure sur un ordinateur 4 et/ou 5 éloigné de la structure. L'opérateur peut alors être assisté, à distance, par un expert. Par exemple, lorsqu'un aéronef stationne sur un aéroport d'un pays étranger, l'expert de la compagnie aérienne ou l'expert du constructeur aéronautique, installé dans les locaux de la compagnie aérienne ou du constructeur aéronautique, peut assister l'opérateur en charge de la maintenance de l'aéronef dans le pays étranger.

Le dispositif de prise d'images 10 est un dispositif apte à réaliser des images en trois dimensions. Un exemple d'un dispositif de prise d'images 3D est représenté sur la figure 2. Dans cet exemple, le dispositif de prise d'images 10 comporte un câble d'alimentation 13. Ce câble 13 assure une alimentation électrique au dispositif ; il peut assurer aussi la transmission des informations vers le dispositif de traitement d'images 6. Il est à noter, toutefois, que l'alimentation électrique du dispositif de prise d'images peut être réalisée au moyen d'une batterie montée dans le dispositif et que la transmission des données vers le dispositif de traitement d'images 6 peut être effectuée par une liaison sans fil.

Le dispositif de prise d'images 10 comporte une caméra 3D symbolisée, sur la figure 2, par son objectif 11. Il comporte également des sources lumineuses 12 installées autour de l'objectif 11 de la caméra. Les sources lumineuses 12 sont réparties régulièrement autour de l'objectif 11. Dans un mode de réalisation préféré de l'invention, les sources lumineuses 12 sont au nombre de quatre, réparties à chaque coin de la face avant du dispositif de prise d'images. Chaque source lumineuse est réalisée au moyen d'une diode électroluminescente, ou LED, ou au moyen d'un ensemble de plusieurs LEDs. Chaque LED ou ensemble de LEDs a une puissance suffisamment élevée pour permettre d'éclairer la zone de structure à inspecter. Des lentilles peuvent être placées devant les LEDs pour amplifier ou modifier l'éclairage.

Dans l'exemple de la figure 2, quatre LEDs ont été représentée installées sur la même façade du dispositif de prise d'images. Il est toutefois possible de les installer sur le côté du dispositif, de façon à faire des ombres portées.

Ces quatre sources lumineuses 12 sont destinées à éclairer la zone de structure à inspecter en intermittence, c'est-à-dire que chacune des sources lumineuses éclaire successivement la même zone de structure à inspecter. A chaque éclairage par une de sources lumineuses, une image de la zone de structure éclairée est réalisée par la caméra. L'éclairage de la zone de structure est effectué sous forme de flash, à intervalle de temps très bref. En effet, l'oeil ne voit que 25 images par seconde, mais les caméras peuvent aller beaucoup plus loin dans la capture d'image. Si les LEDs clignotent à 1/100^{ème} de seconde toutes les 1/25^{ème} de seconde, à chaque clignotement d'une LED, une image est réalisée. Ainsi, avec une caméra à 100 images par secondes, une séquence de 4 images peut être réalisée en 1/25^{ème} de seconde.

Une image de la zone de structure est réalisée à chacun des flashs. Plusieurs images de la même zone de structure, par exemple quatre lorsqu'il y a quatre sources lumineuses, sont ainsi réalisées successivement avec, pour chacune, un éclairage différent. Ces images, par exemple quatre dans l'exemple de la figure 2, sont traitées afin de fournir une image en trois dimensions, c'est-à-dire une image 3D, de la zone de structure à inspecter.

Ce procédé de réalisation de l'image 3D utilise une technologie dite de stéréo-photométrie. Cette technologie consiste à réaliser plusieurs images d'un même objet, sous plusieurs éclairages, de façon à ce que chaque image contienne des ombres différentes du même objet. Un traitement d'images analyse les effets d'ombre sur chaque image et reconstruit une image en 3D de l'objet, avec tous ses détails. On comprendra que plus il y a de sources de lumière, plus il y a d'images et plus l'image 3D obtenue est précise. Une image stéréo-photométrique possède environ 12 niveaux de gris et permet, non seulement de comprendre les distances mais aussi de les ordonner. Cette technologie, utilisée jusqu'à maintenant pour permettre la réalisation d'images 3D d'individus, est appliquée, dans l'invention, à une structure mécanique du type structure d'aéronef. Dans le cadre de l'invention, elle peut aussi être appliquée à des structures autres que celles d'un aéronef, par exemple à des structures automobiles, à des structures de bâtiment ou de travaux publics, etc.

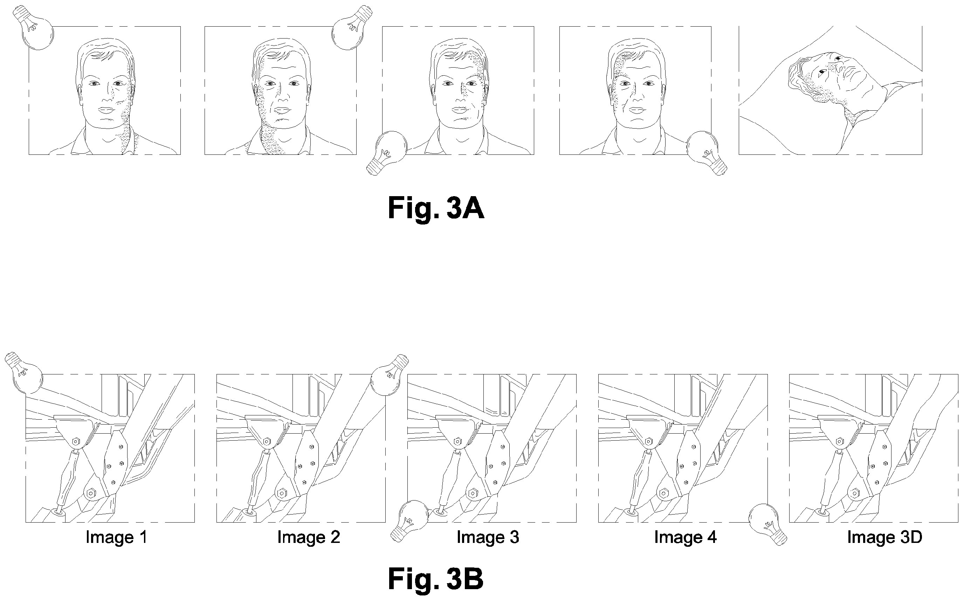

Sur la figure 3, on a représenté deux exemples de prise d'images stéréo-photométrique. La partie A de la figure 3 montre un exemple classique d'utilisation de la technologie de stéréo-photométrie ; la partie B de la figure 3 montre un exemple d'utilisation de cette technologie de stéréo-photométrie dans le cadre de l'invention.

Dans la première série d'images, partie A de la figure 3, un individu est éclairé par quatre sources lumineuses et une image est réalisée à chaque éclairage. Sur ces images, l'emplacement de la source lumineuse utilisée pour l'image concernée est représenté par une ampoule. On voit que, sur chaque image, la source lumineuse éclaire le personnage différemment, créant des ombres différentes. Le traitement de ces ombres permet d'obtenir l'image 3D du visage.

Sur la seconde série d'images, partie B de la figure 3, on a représenté le procédé de stéréo-photométrie dans le cas d'une zone de structure d'aéronef. La zone de structure à inspecter est éclairée sous quatre angles différents, ce qui crée, pour chaque image, des ombres différentes avec des niveaux de gris différents. La dernière image montre l'image 3D obtenue après traitement des quatre images précédentes.

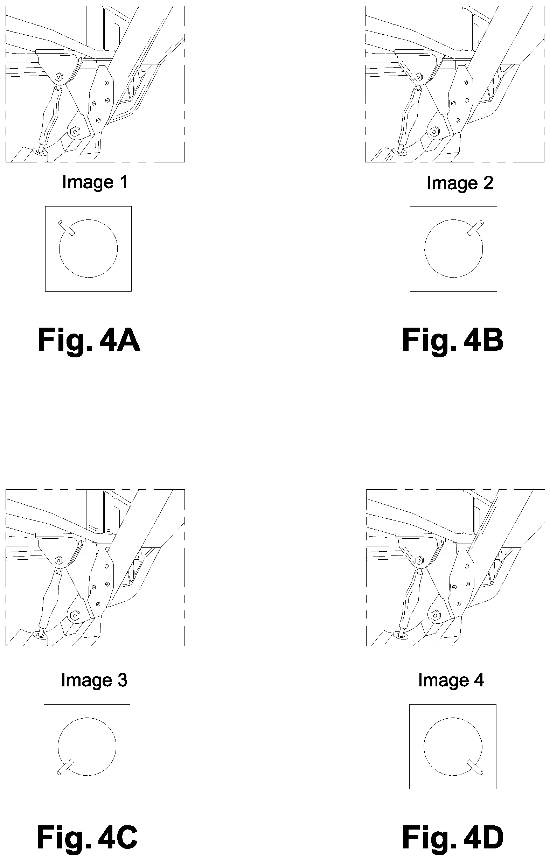

Sur la figure 4A, on a représenté de façon plus détaillée l'image 1 de la figure 3 avec l'emplacement de la source lumineuse. De même, les figures 4B, 4C et 4D montrent respectivement les images 2, 3 et 4 de la figure 3, avec l'emplacement de la source lumineuse utilisée pour réaliser chacune de ces images.

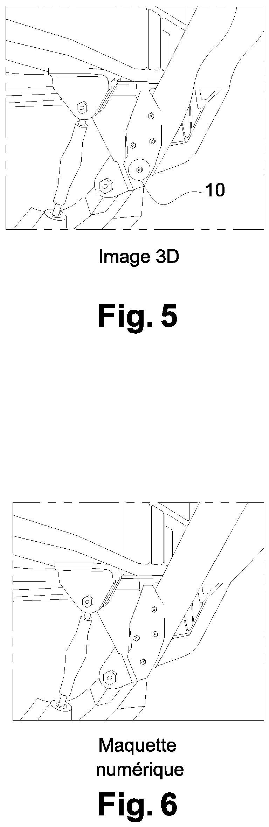

La figure 5 montre l'image 3D obtenue par traitement des images 1, 2, 3 et 4. Ce traitement d'images utilise les différents niveaux de gris des quatre images réalisées pour déterminer les différentes hauteurs formant le relief de l'image 3D. Dans le procédé de l'invention, les images 1, 2, 3 et 4 réalisées par le dispositif de prise d'images 10 sont transmises au dispositif de traitement d'images 6 qui les traite pour réaliser l'image 3D.

Sur la figure 5, on a représenté par un rond, référencé 10, l'emplacement où se situe le dispositif de prise d'images pour réaliser l'image 3D obtenue. Comme on le comprend de ce qui précède, l'image 3D ainsi obtenue est une image réelle de la zone de structure à inspecter. Cette image correspond à ce que pourrait visualiser l'opérateur de maintenance si ses yeux étaient positionnés à l'emplacement 10 du dispositif de prise d'images.

Dans le procédé de l'invention, l'image réelle de la zone de structure à inspecter, c'est-à-dire l'image 3D, est superposée à une image numérique de la même zone de structure. Cette image numérique est une image théorique de la zone de structure à inspecter. Elle constitue la maquette numérique de la structure. En effet, actuellement, la plupart des structures, et notamment les structures d'aéronef, sont conçues sous forme informatique avant d'être fabriquées. Il existe donc une forme numérique de la structure avant même que la structure elle-même n'existe. Cette forme numérique de la structure est une maquette virtuelle de la structure.

La figure 6 représente un exemple de la maquette numérique de la zone de structure d'aéronef correspondant à la zone de structure de l'image 3D de la figure 5.

L'invention propose d'utiliser cette maquette numérique comme image théorique de la structure. Ainsi, selon l'invention, l'image 3D de la zone de structure à inspecter est superposée à la maquette numérique de cette même structure. Cette superposition de l'image 3D sur la maquette numérique permet une géolocalisation de la zone à inspecter, c'est-à-dire une localisation géographique de la zone dans l'ensemble de la structure.

Cette superposition de l'image 3D et de la maquette est réalisée dans le dispositif de traitement d'images 6. L'image superposée est transmise à l'ordinateur 4 et/ou l'ordinateur 5.

Ainsi, le procédé de l'invention consiste à réaliser une image 3D de la zone de structure à inspecter, à partir des images réalisées par la caméra 11 et à superposer cette image 3D avec la maquette numérique préalablement mémorisée. L'expert peut alors localiser géographiquement, sur la maquette de la structure, la zone de structure à inspecter, et inspecter, sur cette superposition de l'image 3D et de la maquette numérique, ladite zone à inspecter.

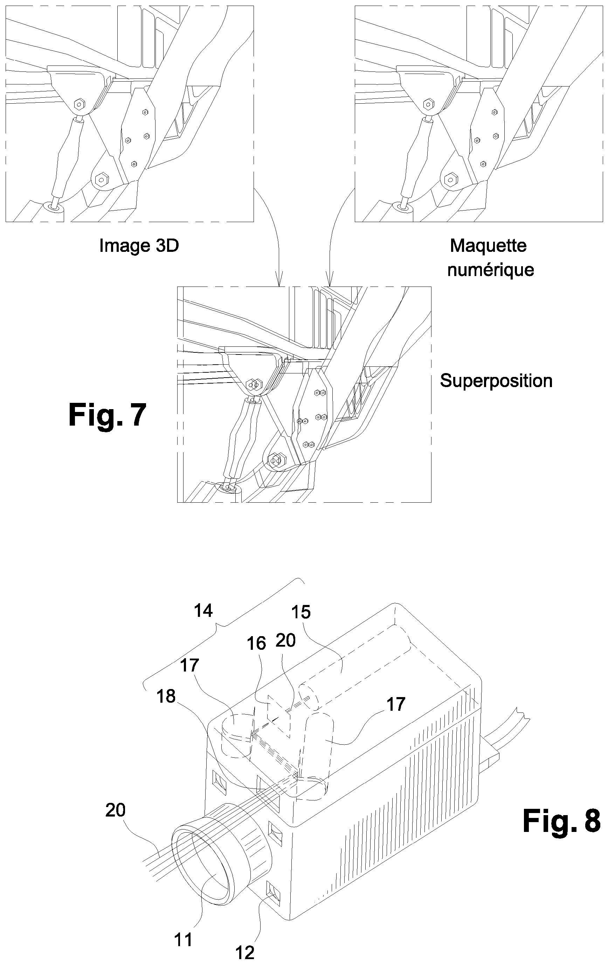

Sur la figure 7, on a représenté l'image 3D de la figure 5 et la maquette de la figure 6. On a représenté, en outre, l'image superposée de l'image 3D de la zone à inspecter avec la maquette de cette même zone. A partir de cette image superposée, l'expert peut affiner et valider la géolocalisation. L'expert sait alors où se situe, dans la structure, la zone à inspecter. Autrement dit, il sait où se situe la zone photographiée par le dispositif de prise d'images. Lorsque la zone à inspecter à été localisée géographiquement, il est possible d'étudier l'état des pièces dans cette zone. L'expert peut alors étudier, à partir de l'image 3D, une pièce réelle, c'est-à-dire une pièce de la structure susceptible d'être endommagée et la comparer avec la pièce virtuelle correspondante. De cette comparaison, il peut déterminer si la pièce réelle est défectueuse ou si elle est dans un état convenable.

Cette superposition de l'image 3D avec la maquette virtuelle de la structure permet de visualiser les empilages de pièces, c'est-à-dire les pièces situées les unes sous les autres, ainsi que les pièces situés sous les habillages la structure, une visualisation à l'oeil nu ne permettant de voir que l'habillage lui-même. Elle permet, en outre, à l'expert, de visualiser le volume entre les différents empilages de pièces. Elle permet également à l'expert de superposer, via la maquette virtuelle, les réparations déjà enregistrées dans la zone.

Pendant l'inspection de la zone de structure, l'expert peut communiquer avec l'opérateur de maintenance par l'intermédiaire d'un moyen de communication classique. Il peut communiquer soit par l'intermédiaire de l'ordinateur, par exemple par une liaison internet ou intranet, soit par téléphone, soit par tout moyen de communication connu. Par cette communication, il peut demander des images d'une autre zone de la structure, il peut demander de refaire une mesure ou bien échanger des avis avec l'opérateur ou encore indiquer à l'opérateur de maintenance un échange ou une réparation de pièce.

Pour communiquer avec l'opérateur, par exemple pour lui indiquer une pièce endommagée, l'expert peut utiliser un faisceau laser comme pointeur. Ce faisceau laser est généré par un dispositif d'émission laser télécommandé, représenté sur la figure 2 par la référence 14. Ce faisceau laser 14 constitue un pointeur permettant de désigner un élément précis dans la zone de structure à inspecter. Ce pointeur laser peut se présenter sous la forme d'une croix, d'un cercle, d'un carré ou de toute autre forme permettant de désigner un élément dans la zone à inspecter.

La figure 8 représente un exemple de dispositif de prise d'images de l'invention, équipé d'un dispositif d'émission d'un faisceau laser 14. Ce dispositif d'émission 14 comporte un générateur laser 15 émettant un faisceau laser 20. Il comporte aussi un prisme 16 constituant la forme du pointeur. Ce prisme peut avoir une forme de croix de sorte que le pointeur laser est en forme de croix. Ce prisme peut être interchangeable afin de permettre l'obtention de différentes formes de pointeur.

Le faisceau laser obtenu en sortie du prisme 16 peut être orienté horizontalement et/ou verticalement. Cette orientation est obtenue par réflexion du faisceau laser sur des miroirs ou des prismes déplacés au moyen d'un moteur horizontal 17 et d'un moteur vertical 19. Le faisceau laser 20, une fois orienté, est émis à travers une fenêtre de sortie 18.

L'orientation du faisceau laser 20 est commandée à distance, depuis l'ordinateur 4 ou 5. Autrement dit, le faisceau laser est télécommandé par l'expert. Il peut être télécommandé à partir de la souris connectée à l'ordinateur sur lequel l'expert visualise la zone de structure. De cette façon, l'expert peut indiquer à l'opérateur l'élément précis qui doit être réparé ou interchangé. Ce pilotage à distance du pointeur laser permet de réduire le risque d'erreur dû à une mauvaise compréhension entre l'opérateur et l'expert.

Le pointeur laser peut aussi constituer une cible fixée à une pièce de la maquette virtuelle, supprimant ainsi tout mouvement parasite du dispositif de prise d'images. Ce procédé de fixation du pointeur laser permet de figer un point virtuel sur avion correspondant à un point virtuel de la maquette. Une fois le pointeur laser fixé, il est possible de faire tourner la caméra autour d'une pièce liée à la zone d'observation. Par exemple, il est possible de tourner visuellement autour d'une vis pour trouver l'écrou qui correspond à cette vis en passant de l'autre coté d'une paroi ou d'une pièce.

Par ailleurs, on sait qu'il est de plus en plus fréquent d'installer des puces sur chaque pièce d'une structure afin de connaitre rapidement les caractéristiques et spécificités de cette pièce. Ces puces, de type RFID, contiennent des informations quant à leur forme, leur localisation, etc. Le procédé de l'invention peut comporter une étape préliminaire prélocalisation de la zone de structure à inspecter. Pour cela, le dispositif de prise d'images du système de l'invention comporte un lecteur de puce apte à lire les données enregistrées dans la puce de la pièce dont il va réaliser des images. Cette prélocalisation a l'avantage d'alléger le traitement informatique effectué par l'ordinateur pour localiser géographiquement la zone dans la structure à inspecter. Avec un tel procédé, la localisation de la pièce est déterminée directement dès que le dispositif de prise d'images s'approche de l'emplacement où se trouve la puce. Le traitement de géolocalisation est réalisé directement sur la zone dont l'emplacement a été fourni par la puce.

L'invention vient d'être décrite dans un cas de maintenance d'un aéronef. Elle peut aussi être appliquée à l'assemblage des pièces formant une structure d'avion, par exemple, pour vérifier après montage la qualité de l'assemblage et voir si la structure ainsi assemblée correspond bien à la maquette.

Elle peut aussi constituer une aide pour analyser ou prévisualiser une gamme de montage avant application sur avion par incrustation d'image virtuelle sur image réelle.

L'invention peut également être utilisée en vol, par l'équipage, en cas d'avarie sur l'appareil ou les systèmes embarqués. Elle peut aussi être utilisée en vol pour filmer en direct un évènement particulier qui se produit dans l'aéronef, les images réalisées pouvant être utilisées comme preuves du déroulement des faits.

Le système de l'invention qui vient d'être décrit offre une aide à la maintenance et à la prise de décision à distance. Il peut aussi servir de lien entre un opérateur de maintenance à bord de l'aéronef et le bureau de maintenance de la compagnie aérienne.

Le système de l'invention peut aussi permettre une identification automatique de la structure ; par exemple, lorsque la connexion est établie, une série de bits peut identifier la structure considérée et l'aéronef pour lequel elle a été affectée.

Ce système peut ainsi constituer un support technique et de maintenance livré avec l'aéronef.

Le procédé qui vient d'être décrit utilise une caméra vidéo. Une caméra thermique pourrait être ajoutée dans le dispositif de prise d'images pour permettre une inspection des ailerons ; une caméra de photogrammétrie pourrait aussi être ajoutée pour permettre des relevés de dimensionnement.

## Revendications

1. Procédé d'inspection à distance d'une structure d'aéronef, le procédé comportant les opérations suivantes :
a) réalisation d'une image 3D d'une zone de la structure à inspecter,
b) superposition de cette image 3D avec une maquette numérique de la structure préalablement mémorisée, cette superposition d'images étant réalisée par un dispositif de traitement d'images (6) positionné à proximité de la zone de structure à inspecter pour permettre une inspection de la structure sur place,
c) localisation géographique, sur la maquette de la structure, de la zone de la structure à inspecter, et inspection à distance de la zone de structure à inspecter, sur la superposition de l'image 3D et de la maquette numérique.

2. Procédé selon la revendication 1, **caractérisé en ce que** l'image 3D est réalisée par stéréo-photométrie.

3. Procédé selon la revendication 2, **caractérisé en ce que** l'opération a) de réalisation d'une image 3D comporte :
- un éclairage successif et intermittent de la zone de structure à inspecter, par des sources lumineuses (12) placées chacune à un emplacement différent,
- une prise d'image, à chaque éclairage, de la zone de structure à inspecter, et
- un traitement de différentes images ainsi obtenues pour réaliser l'image 3D.

4. Procédé selon la revendication 3, **caractérisé en ce que** l'opération a) comporte quatre prises d'images de la zone de structure à inspecter (image1, image2, image3, image4), sous quatre éclairages différents.

5. Procédé selon l'une quelconque des revendications 1 à 4, **caractérisé en ce que** l'étape c) de localisation géographique comporte une opération de pointage télécommandé d'une pièce de la zone de structure.

6. Procédé selon l'une quelconque des revendications 1 à 5, **caractérisé en ce qu'**il comporte une étape préliminaire de prélocalisation de la zone à inspecter par détection et lecture de données contenues dans des puces fixées chacune sur une pièce de la structure.

7. Système de mise en oeuvre du procédé d'inspection à distance d'une structure d'aéronef selon l'une quelconque des revendications 1 à 6, le système comportant:
- un dispositif de prise d'images (10) apte à être installé à proximité de la zone de structure à inspecter (2) et comportant une pluralité de sources lumineuses (12) réparties autour d'une caméra (11), et
- un dispositif de traitement d'images (6) relié au dispositif de prise d'images (10) et installé à proximité de la zone de structure à inspecter (2), ce dispositif de traitement d'images étant apte à générer une image 3D de la zone de structure à inspecter à partir d'images réalisées par la caméra (11) et à superposer ladite image 3D avec une maquette numérique de la zone de la structure permettant une inspection de la structure sur place, et
- un ordinateur (4, 5) éloigné de la structure et apte à superposer l'image 3D avec une maquette numérique de la zone de la structure pour permettre une inspection à distance de la zone de structure à inspecter.

8. Système selon la revendication 7, **caractérisé en ce que** les sources lumineuses (12) sont constituées de quatre LEDs réparties à chaque coin d'une façade du dispositif de prise d'images (10).

9. Système selon la revendication 7 ou 8, **caractérisé en ce qu'**il comporte un ordinateur (4, 5) relié par une liaison sans fil au dispositif de traitement d'images (6).

10. Système selon l'une quelconque des revendications 7 à 9, **caractérisé en ce que** le dispositif de prise d'images (10) comporte un dispositif d'émission d'un faisceau laser (14) télécommandé.

## Patentansprüche

1. Verfahren zur Ferninspektion einer Luftfahrzeugstruktur, wobei das Verfahren die folgenden Arbeitsschritte umfasst:
a) Herstellung eines 3D-Bildes eines zu inspizierenden Bereichs der Struktur,
b) Überlagerung dieses 3D-Bildes mit einem zuvor gespeicherten digitalen Modell der Struktur, wobei diese Überlagerung von Bildern von einer Bildverarbeitungsvorrichtung (6) durchgeführt wird, die in der Nähe des zu inspizierenden Strukturbereichs positioniert ist, um eine Inspektion der Struktur vor Ort zu ermöglichen,
c) geographische Lokalisierung, an dem Modell der Struktur, des zu inspizierenden Bereichs der Struktur und Ferninspektion des zu inspizierenden Strukturbereichs auf der Überlagerung des 3D-Bildes und des digitalen Modells.

2. Verfahren nach Anspruch 1, **dadurch gekennzeichnet, dass** das 3D-Bild durch Stereophotometrie hergestellt wird.

3. Verfahren nach Anspruch 2, **dadurch gekennzeichnet, dass** der Arbeitsschritt a) der Herstellung eines 3D-Bildes umfasst:
- eine aufeinander folgende und intermittierende Beleuchtung des zu inspizierenden Strukturbereichs durch Lichtquellen (12), die jeweils an einem anderen Ort angeordnet sind,
- eine Aufnahme eines Bildes des zu inspizierenden Strukturbereichs bei jeder Beleuchtung, und
- eine Verarbeitung verschiedener so gewonnener Bilder, um das 3D-Bild herzustellen.

4. Verfahren nach Anspruch 3, **dadurch gekennzeichnet, dass** der Arbeitsschritt a) vier Aufnahmen von Bildern des zu inspizierenden Strukturbereichs (image1, image2, image3, image4) unter vier verschiedenen Beleuchtungen umfasst.

5. Verfahren nach einem der Ansprüche 1 bis 4, **dadurch gekennzeichnet, dass** der Schritt c) der geographischen Lokalisierung einen Arbeitsschritt des ferngesteuerten Zeigens eines Teils des Strukturbereichs umfasst.

6. Verfahren nach einem der Ansprüche 1 bis 5, **dadurch gekennzeichnet, dass** es einen vorausgehenden Schritt der Vorlokalisierung des zu inspizierenden Bereichs durch Detektion und Lesen von Daten umfasst, die in Chips enthalten sind, welche jeweils an einem Teil der Struktur befestigt sind.

7. System zur Durchführung des Verfahrens zur Ferninspektion einer Luftfahrzeugstruktur nach einem der Ansprüche 1 bis 6, wobei das System umfasst:
- eine Vorrichtung zur Aufnahme von Bildern (10), die geeignet ist, in der Nähe des zu inspizierenden Strukturbereichs (2) installiert zu werden, und mehrere Lichtquellen (12) aufweist, die um eine Kamera (11) herum verteilt sind, und
- eine Vorrichtung zur Bildverarbeitung (6), die mit der Vorrichtung zur Aufnahme von Bildern (10) verbunden ist und in der Nähe des zu inspizierenden Strukturbereichs (2) installiert ist, wobei diese Vorrichtung zur Bildverarbeitung geeignet ist, ein 3D-Bild des zu inspizierenden Strukturbereichs aus von der Kamera (11) hergestellten Bildern zu erzeugen und dieses 3D-Bild mit einem digitalen Modell des Bereichs der Struktur zu überlagern, was eine Inspektion der Struktur vor Ort ermöglicht, und
- einen Computer (4, 5), der von der Struktur entfernt ist und geeignet ist, das 3D-Bild mit einem digitalen Modell des Bereichs der Struktur zu überlagern, um eine Ferninspektion des zu inspizierenden Strukturbereichs zu ermöglichen.

8. System nach Anspruch 7, **dadurch gekennzeichnet, dass** die Lichtquellen (12) aus vier LEDs bestehen, die auf alle Ecken einer Vorderseite der Vorrichtung zur Aufnahme von Bildern (10) verteilt sind.

9. System nach Anspruch 7 oder 8, **dadurch gekennzeichnet, dass** es einen Computer (4, 5) umfasst, der über eine drahtlose Verbindung mit der Vorrichtung zur Bildverarbeitung (6) verbunden ist.

10. System nach einem der Ansprüche 7 bis 9, **dadurch gekennzeichnet, dass** die Vorrichtung zur Aufnahme von Bildern (10) eine ferngesteuerte Vorrichtung zum Aussenden eines Laserstrahls (14) aufweist.

## Claims

1. Method of remote inspection of an aircraft structure, the method comprising the following operations:
a) production of a 3D image of a zone of the structure to be inspected,
b) superposition of this 3D image with a digital mockup of the structure stored previously, this superposition of images being carried out by an image processing device (6) positioned in proximity to the structure zone to be inspected so as to allow inspection of the structure in-situ,
c) geographical location, on the mockup of the structure, of the zone of the structure to be inspected, and remote inspection of the structure zone to be inspected, on the superposition of the 3D image and of the digital mockup.

2. Method according to Claim 1, **characterized in that** the 3D image is produced by stereo-photometry.

3. Method according to Claim 2, **characterized in that** operation a) of production of a 3D image comprises:
- successive and intermittent illumination of the structure zone to be inspected, by light sources (12) each placed at a different site,
- image capture, at each illumination, of the structure zone to be inspected, and
- processing of various images thus obtained to produce the 3D image.

4. Method according to Claim 3, **characterized in that** operation a) comprises four captures of images of the structure zone to be inspected (image1, image2, image3, image4), under four different illuminations.

5. Method according to any one of Claims 1 to 4, **characterized in that** step c) of geographical location comprises an operation of remotely controlled pointing of a component of the structure zone.

6. Method according to any one of Claims 1 to 5, **characterized in that** it comprises a preliminary step of prelocating the zone to be inspected by detecting and reading data contained in chips each fixed on a component of the structure.

7. System for implementing the method of remote inspection of an aircraft structure according to any one of Claims 1 to 6, the system comprising:
- an image capture device (10) able to be installed in proximity to the structure zone to be inspected (2) and comprising a plurality of light sources (12) distributed around a camera (11), and
- an image processing device (6) linked to the image capture device (10) and installed in proximity to the structure zone to be inspected (2), this image processing device being able to generate a 3D image of the structure zone to be inspected on the basis of images produced by the camera (11) and to superpose the said 3D image with a digital mockup of the zone of the structure allowing inspection of the structure in-situ, and
- a computer (4, 5) distant from the structure and able to superpose the 3D image with a digital mockup of the zone of the structure to allow remote inspection of the structure zone to be inspected.

8. System according to Claim 7, **characterized in that** the light sources (12) consist of four LEDs distributed at each corner of a facade of the image capture device (10).

9. System according to Claim 7 or 8, **characterized in that** it comprises a computer (4, 5) linked to the image processing device (6) by a wireless link.

10. System according to any one of Claims 7 to 9, **characterized in that** the image capture device (10) comprises a device for emitting a laser beam (14) controlled remotely.
